# EUROPÄISCHE PATENTSCHRIFT

(11) **EP 2 736 729 B1**
(45) Veröffentlichungstag und Bekanntmachung des Hinweises auf die Patenterteilung: **12.08.2015**
(21) Anmeldenummer: 12726742.5
(22) Anmeldetag: 04.06.2012
(51) Int. Cl.: B32B 3/18, B32B 27/08, B29C 47/00, B29L 17/00, B29C 47/56, B32B 27/30, B32B 27/36, B32B 27/40, B29C 47/92, B42D 25/00, B29C 47/06

(54) **DATENTRÄGERKARTE MIT SICHERHEITSFADEN**
DATA CARRIER CARD HAVING A SECURITY THREAD
CARTE DE STOCKAGE DE DONNÉES À FIL DE SÉCURITÉ

(30) Priorität: 26.07.2011 DE 102011108527
(43) Veröffentlichungstag der Anmeldung: 04.06.2014
(73) Patentinhaber: Giesecke & Devrient GmbH, 81677 München (DE)
(72) Erfinder: RIEDL, Josef, 85395 Attenkirchen (DE)
(86) Internationale Anmeldenummer: PCT/EP2012/002362
(87) Internationale Veröffentlichungsnummer: WO 2013/013736

(56) Entgegenhaltungen:
- WO-A1-2011/072818
- FR-A1- 2 935 635

## Beschreibung

Die vorliegende Erfindung betrifft eine Datenträgerkarte, umfassend einen Kartenkörper und einen in den Kartenkörper integrierten Sicherheitsfaden, sowie ein Verfahren zur Herstellung einer solchen Datenträgerkarte.

Datenträgerkarten, insbesondere Chip- oder Magnetstreifenkarten, werden zumeist aus einer oder aus mehreren miteinander laminierten Kunststoffolien gefertigt, die den Kartenkörper der Datenträgerkarte bilden. Deren Kartenkörper umfassen meist einen Kartenkern, der Datenspeicher- und/ oder Datenverarbeitungsmittel, wie Mikrochips oder Magnetstreifen, enthält. Schutz- oder Deckfolien, die auf Vorder- und Rückseite des Kartenkerns laminiert sind, können je nach Anforderung transmittierend, das heißt transluzent oder transparent, oder opak sein. Der Kartenkern selbst besteht dabei ebenfalls aus einer oder mehreren Kunststoffolien, die miteinander laminiert sind. Der Kartenkörper und auch der Kartenkern der Datenträgerkarte bilden im Fall mehrerer Kunststoffolien jeweils einen laminierten Folienverbund. Gegebenenfalls kann auf das vorsehen von Schutz- oder Deckfolien verzichtet werden.

Es ist weiterhin bekannt, in oder auf dem Kartenkern einer solchen Datenträgerkarte als Sicherheitselement einen Sicherheitsfaden vorzusehen, wie er insbesondere von Banknoten bekannt ist.

Ein solcher typischer Sicherheitsfaden umfasst eine Trägerfolie, beispielsweise aus PET, mit einer Bedruckung, mit einer Beschichtung, mit in der Trägerfolie eingelagerten, speziellen Pigmenten und/ oder mit anderen Sicherheitselementen, die ein Nachahmen verhindern. Typische banknotenartige Sicherheitsfäden weisen zudem regelmäßig eine im Vergleich zu der Banknote sehr geringe Breite auf und werden von einem Betrachter als Echtheits- und/ oder Authentifizierungsmerkmal erkannt.

Das Einbringen eines typischen banknotenartigen Sicherheitsfadens in eine Datenträgerkarte verursacht allerdings technische Schwierigkeiten. Beispielsweise ist es problematisch, einen solchen Sicherheitsfaden auf eine Kunststoffolie des Kartenkörpers zu applizieren und dabei zugleich einen mechanisch stabilen Verbund zu realisieren. Um hier eine ausreichende Festigkeit des Verbunds aus Sicherheitsfaden und Kunststoffolie zu erreichen, ist es in der Regel notwendig, die beiden Elemente mit Hilfe spezieller Klebstoffe zu laminieren, was gegebenenfalls die Materialauswahl für Sicherheitsfaden und Kunststoffolie einschränkt. In jedem Fall führt diese Verwendung spezieller Klebstoffe zu zusätzlichen Herstellungsschritten, was Aufwand und Kosten erhöht.

Weiter wird die weitere Verarbeitung einer Folie mit einem applizierten Sicherheitsfaden durch diesen erschwert, indem ein unmittelbares Bedrucken von Sicherheitsfaden und umgebender Kunststoffolie nicht ohne Weiteres möglich ist.

Das Einbringen eines Sicherheitsfadens kann weiter zu einer lokalen Verdickung einer Datenträgerkarte führen, welche deren Erscheinungsbild unerwünscht beeinträchtigt. In diesem Zusammenhang besteht prinzipiell die Möglichkeit einen Sicherheitsfaden ohne Trägerfolie zu verwenden, beispielsweise in Form eines Transferelements. Die Beständigkeit solcher Sicherheitsfäden ohne Trägerfolie ist jedoch gering. Sie weisen eine erhöhte Anfälligkeit gegenüber äußerem Druck, extremen Temperaturen und chemischen Einflüssen auf.

Aus der US 2010/0276919 A1 ist eine für Banknoten geeignete Sicherheitsfolie bekannt, die aus einem coextrudierten Grundkörper und einem damit verbundenen transparenten Abschnitt besteht. Der coextrudierte Grundkörper umfasst eine Kernschicht, die sandwichartig zwischen zwei Deckschichten angeordnet ist. In jede der Schichten sowie in den transparenten Abschnitt können Sicherheitselemente eingebracht sein. Eines von mehreren möglichen Sicherheitselementen ist ein Sicherheitsfaden. Für die Herstellung ist prinzipiell als Möglichkeit vorgeschlagen, die Sicherheitselemente des coextrudierten Grundkörpers schon vor dem Coextrudieren einzubringen. Wird der Grundkörper allerdings durch Coextrusion hergestellt und soll dabei ein Sicherheitsfaden vor dem Coextrudieren in das Ausgangsmaterial eingebracht werden, muß der Sicherheitsfaden dem Coextrusionsprozeß standhalten und entsprechend stabil ausgeführt sein. Eine kontrollierte Plazierung in dem coextrudierten Körper ist dann zudem nicht mehr ohne weiteres möglich. Wegen des daraus resultierenden Aufwandes bei der Herstellung ist das Einbringen eines typischen Sicherheitsfadens vor dem Coextrudieren für Massenanwendungen ungeeignet.

WO 2011/072818 A1 offenbart eine Datenträgerkarte gemäß den Oberbegriff des Anspruchs 1.

Insgesamt führt das Einbringen eines Sicherheitsfadens in den Kartenkörper einer Datenträgerkarte zu einer aufwendigen und kostenintensiven Herstellung, zu eingeschränkten Variations- und Modifikationsmöglichkeiten bei der weiteren Verarbeitung der Kunststoffolie mit Sicherheitsfaden und gegebenenfalls zu einem beeinträchtigten Erscheinungsbild der Datenträgerkarte.

Vor diesem Hintergrund ist es Aufgabe der vorliegenden Erfindung, eine Datenträgerkarte mit einem Sicherheitsfaden anzugeben, die kostengünstig hergestellt werden kann und eine Vielzahl von Freiheitsgraden bei der weiteren Verarbeitung bietet. Es ist weiterhin Aufgabe der vorliegenden Erfindung ein geeignetes Herstellungsverfahren für eine solche Datenträgerkarte anzugeben.

Die Aufgabe wird durch eine Datenträgerkarte und ein Herstellungsverfahren gemäß den unabhängigen Ansprüchen gelöst. Weiterbildungen der Erfindung sind in den abhängigen Ansprüchen angegeben.

Die erfindungsgemäße Datenträgerkarte umfasst einen Kartenkörper, welcher eine oder mehrere Kunststoffolien, sowie einen in den Kartenkörper integrierten Sicherheitsfaden aufweist. Der Sicherheitsfaden ist dabei mit der einen Folie oder mit zumindest einer der mehreren Folien des Kartenkörpers coextrudiert.

Der Erfindung liegt die Erkenntnis zugrunde, dass ein Sicherheitsfaden bereits während der Folienherstellung in eine der Kunststoffolien des Kartenkörpers der Datenträgerkarte integriert werden kann, indem er in Form eines in der Fläche einer Folie liegenden Fadenstreifens coextrudiert wird und damit einen Bestandteil dieser Folie bildet. Dadurch ergibt sich ein einfaches und kostengünstiges Herstellungsverfahren. Bislang notwendige Herstellungsschritte zum gesonderten Einbringen des Sicherheitsfadens in den Kartenkörper der Datenträgerkarte entfallen. Entsprechend müssen auch keine speziellen Klebemittel zur Herstellung des Verbunds aus Kunststoffolie und Sicherheitsfaden verwendet werden, wodurch auch eventuelle daraus resultierende Einschränkungen in der Materialauswahl entfallen. Die mit dem Sicherheitsfaden coextrudierte Kunststoffolie kann eine Deckschicht oder eine Schicht des Kartenkerns des Kartenkörpers sein. Dabei geht die Datenträgerkarte aus dem Kartenkörper beispielsweise durch Bedrucken hervor. Da der Sicherheitsfaden erfindungsgemäß durch Coextrusion in eine der Kunststoffolien des Kartenkörpers integriert ist, unterscheidet sich die Weiterverarbeitung der mit dem Sicherheitsfaden coextrudierten Folie nicht von der Weiterverarbeitung von anderen Kunststoffolien ohne Sicherheitsfaden, beispielsweise vollflächig homogen ausgestalteten Kunststoffolien. Es kann auf die zusammen mit dem Sicherheitsfaden coextrudierte Folie in allen Oberflächenbereichen, das heißt sowohl oberhalb als auch neben dem Sicherheitsfaden ohne Einschränkungen mit allen gängigen Druckverfahren gedruckt werden.

Die erfindungsgemäße Datenträgerkarte löst auch das Problem, dass Sicherheitsfäden in herkömmlichen Datenträgerkarten einen Fremdkörper in dem laminierten Folienverbund darstellen, der an der Position des Sicherheitsfadens die Festigkeit und die mechanische Stabilität der damit ausgerüsteten Datenträgerkarte vermindert; dieses Fremdkörperverhalten erzeugt in bekannten Datenträgerkarten an der Stelle des Sicherheitsfadens im übrigen eine unerwünschte Sollbruchstelle, die einen Angriffspunkt für Fälscher bieten kann, um eine Datenträgerkarte in ihre Bestandteile zu zerlegen. Dies ist vor allem bei Verwendung eines Sicherheitsfadens mit PET-Trägerfolie der Fall. Durch die erfindungsgemäße Integration des Sicherheitsfadens per Coextrusion entsteht an der Stelle des Sicherheitsfadens dagegen keine Sollbruchstelle mehr, weil der Folienverbund des Kartenkörpers an der Stelle des coextrudierten Sicherheitsfadens ebenso fest und stark ist wie in den übrigen, neben dem Sicherheitsfaden liegenden Flächenbereichen.

Der Sicherheitsfaden basiert in an sich bekannter Weise auf einem schmalen Fadenstreifen, der beispielsweise eine Breite zwischen 0,5 mm und 10 mm aufweist, vorzugsweise weniger als 8 mm, besonders bevorzugt zwischen 2 und 5 mm. Bei Datenträgerkarten im ID1-Format (Kantenlängen 85,60 mm × 53,98 mm) ergibt sich somit ein schmaler bis sehr schmaler Sicherheitsfaden. Alternativ kann die Breite des Sicherheitsfadens auch in Abhängigkeit von den Kartenabmessungen gewählt werden. Die Breite des Sicherheitsfadens weist dann beispielsweise eine Breite zwischen 1 und 20% der Breite der Streifenfolie, vorzugsweise weniger als 15%, bevorzugt zwischen 5% und 10%, auf. Sind die übrigen Flächenbereiche ebenfalls streifenförmig ausgebildet, so weist der Sicherheitsfaden vorzugsweise die geringste Breite der verschiedenen streifenförmigen Bereiche der zumindest einen Folie des Kartenkörpers auf. Dabei weist der Sicherheitsfaden üblicherweise eine konstante Breite auf.

Dabei ist der Sicherheitsfaden flach und in der Fläche sowie üblicherweise auch in Richtung der Dicke, gleichförmig und somit homogen ausgebildet. Durch Coextrusion kann vorteilhaft bereits der fertige Sicherheitsfaden erzeugt werden, indem etwa der Kunststoffschmelze, die den Sicherheitsfaden bildet, geeignete Zusatzstoffe beigemischt werden, wie sie im Folgenden noch erläutert werden. In einer ebenfalls vorteilhaften Alternative wird durch die Coextrusion ein Substrat des Sicherheitsfadens erzeugt, das besondere geeignete Zusatzstoffe enthalten kann, und das durch eine einfache weitere Maßnahme, etwa durch Bedruckung, einen fertigen, banknotenartige Sicherheitsfaden schafft.

Vorzugsweise ist in der Datenträgerkarte genau ein Sicherheitsfaden vorgesehen. Entsprechend ist in der zumindest einen coextrudierten Folie des Kartenkörpers genau ein als Sicherheitsfaden ausgebildeter Fadenstreifen vorgesehen. Ein solcher einzelner Fadenstreifen hebt sich vorzugsweise visuell deutlich von den umgebenden Bereichen ab und wird von einem Betrachter auf Grund seiner Ausgestaltung leicht als Sicherheitsfaden erkannt, beispielsweise auf Grund seiner Breite, auf Grund der verwendeten Pigmente und Stoffen in Substrat und/oder Bedruckung, auf Grund von Auf-/ Durchlichteffekten und/ oder auf Grund von Echtheits- und/ oder Authentifizierungsmerkmalen. Entsprechend ist es vorteilhaft, wenn die übrigen Flächenbereiche der zumindest einen Folie ebenfalls streifenförmig ausgebildet sind und weitere Streifen bilden, die nicht als Sicherheitsfaden erkannt werden und nicht als Sicherheitsfaden ausgebildet sind. Zweckmäßig weisen die übrigen Bereiche oder Streifen besonders geeignete Zusatzstoffe, wie sie der Fadenstreifen aufweist, nicht auf, sondern sie weisen andere Zusatzstoffe als der Sicherheitsfaden bzw. der diesen tragende Fadenstreifen enthalten auf. Die übrigen Bereiche besitzen vorzugsweise zudem eine größere Breite als die Sicherheitsfäden, vermitteln keine Auf- oder Durchlichteffekte und/oder zeigen keine Echtheits- und/oder Authentifizierungsmerkmale.

In einer bevorzugten Ausgestaltung der Datenträgerkarte ist die zumindest eine mit dem Sicherheitsfaden coextrudierte Folie als Streifenfolie mit parallelen Streifen konstanter Breite ausgebildet, in welcher der Sicherheitsfaden einen schmalen Fadenstreifen bildet. Im Fall von zwei Streifen sind dies der Sicherheitsfaden sowie ein benachbarter, unmittelbar angrenzender Streifen der Folie, der sich über die restliche Fläche der Streifenfolie erstreckt. Entsprechend ist der Sicherheitsfaden an einer Kante des Kartenkörpers angeordnet. Der Sicherheitsfaden und der benachbarte Streifen der Streifenfolie unterscheiden sich in ihrer jeweiligen Beschaffenheit. Beispielsweise basieren die beiden Streifen auf verschiedenen Kunststoffen. Sie können aber auch auf dem gleichen Kunststoff basieren und sich lediglich durch beigemischte Zusatzstoffe unterscheiden. Dabei ist vorzugsweise der Sicherheitsfaden von dem benachbarten Streifen visuell unterscheidbar. Vorzugsweise umfasst die Streifenfolie jedoch drei Streifen, nämlich den schmalen Sicherheitsfaden bzw. den zugrundeliegenden Fadenstreifen sowie rechts und links davon zwei breite Streifen, die sich über den Rest der Fläche der Streifenfolie erstrecken. Das heißt an den Sicherheitsfaden grenzen beidseitig weitere Streifen an. Diese weisen vorzugsweise eine identische Beschaffenheit auf.

Die zumindest zwei Streifen der Streifenfolie sind üblicherweise durchgängig ausgebildet, das heißt sie erstrecken sich über die gesamte Länge des Kartenkörpers der Datenträgerkarte. Dabei ist die Integration von Streifenfolien in Kunststoffkarten grundsätzlich aus der WO 2009/153056 bekannt.

Bevorzugt weisen alle Streifen der Streifenfolie die gleiche Schichtdicke auf. Damit verursacht das Integrieren des Sicherheitsfadens in den Kartenkern keine unerwünschte Erhebung in der Fläche, das heißt keine unerwünschte Dickenvariation in der Datenträgerkarte. Alternativ kann jedoch der Sicherheitsfaden auch gezielt eine geringere oder größere Schichtdicke als die umgebenden oder die übrigen Streifen aufweisen.

In einer bevorzugten Ausgestaltung der Datenträgerkarte weist der Kartenkörper, besonders bevorzugt ein Kartenkern des Kartenkörpers, eine Vielzahl, das heißt zwei, drei oder mehr als drei übereinander angeordnete, jeweils coextrudierte Streifenfolien auf, in denen jeweils ein schmaler Fadenstreifen ein Sicherheitsfadensubstrat bildet. Die verschiedenen coextrudierten Streifenfolien mit integriertem Sicherheitsfadensubstrat sind dabei vorzugsweise so miteinander laminiert oder auch coextrudiert, dass deren jeweilige Sicherheitsfadensubstrate deckungsgleich übereinander angeordnet sind. Vorzugsweise weisen die Sicherheitsfadensubstrate der verschiedenen Streifenfolien eine identische Breite auf. Dadurch ergeben sich zusätzliche Freiheitsgrade bei der Ausgestaltung des aus den verschiedenen Sicherheitsfadensubstraten resultierenden Sicherheitsfadens.

Der Sicherheitsfaden kann transmittierend ausgebildet sein, wobei unter transmittierend sowohl vollkommen lichtdurchlässig, das heißt transparent, als auch teilweise lichtdurchlässig, d.h. transluzent, zu verstehen ist. Diese Angaben gelten dabei für den sichtbaren Spektralbereich. Der Sicherheitsfaden kann jedoch auch opak, das heißt für einen Betrachter lichtundurchlässig, ausgebildet sein. Weiterhin kann der Sicherheitsfaden farbig, etwa weiß, oder farblos ausgebildet sein. Ein weißes Sicherheitsfadensubstrat eignet sich gut zum weiteren Bedrucken. Der oder die den Sicherheitsfaden umgebenden Bereiche der zumindest einen Kunststoffolie, im Falle einer Streifenfolie die benachbarten Streifen, unterscheiden sich vorzugsweise visuell von dem Sicherheitsfaden. Beispielsweise kann der Sicherheitsfaden transmittierend sein, während der oder die umgebenden Bereiche opak sind. Alternativ sind der Sicherheitsfaden und die umgebenden Bereiche verschiedenfarbig ausgebildet, was durch geeignete, eingelagerte Farbpigmente oder -stoffe erreicht werden kann.

In einer bevorzugten Ausgestaltung umfasst der Sicherheitsfaden Pigmente und/ oder anderweitige Zusatzstoffe, die ein Sicherheits- oder Echtheitsmerkmal darstellen können und/ oder optisch wirksam sind, das heißt bei einem Betrachter einen besonderen, visuell wahrnehmbaren Effekt erzielen, insbesondere einen optisch variablen Effekt. Dies sind beispielsweise Colorshift-Pigmente, die einen Farbkippeffekt erzeugen. Diese basieren beispielsweise auf einer oder mehreren Interferenzschichten und sind unter den Namen Colorcrypt-, Colorstream,- Iriodin- oder OVI-Pigmente bekannt. Solche Colorshift-Pigmente können jedoch auch auf Flüssigkristallen, insbesondere cholesterischen Flüssigkristallen, beruhen, welche unter dem Namen STEP-Pigmente bekannt sind. Alternativ oder zusätzlich kann der Sicherheitsfaden auch silberfarbene, goldfarbene und/oder glänzend Pigmente oder Stoffe enthalten, welche das Erscheinungsbild eines an sich bekannten Sicherheitsfadens gut nachbilden. Dabei imitieren insbesondere silbrig-glänzende Pigmente gut die Metallisierungsschicht, die sich häufig in herkömmlichen Sicherheitsfäden findet. Der Sicherheitsfaden kann jedoch auch fluoreszierende oder thermochrome Pigmente oder Stoffe enthalten, ebenso wie laserempfindliche oder laserveränderliche Pigmente oder Stoffe, die eine Bearbeitung des Sicherheitsfadensubstrats per Laserbestrahlung, beispielsweise zu Personalisierungszwecken, gestattet. Dazu kommen insbesondere IR-absorbierende Pigmente, wie Ruß, in Frage. Der Sicherheitsfaden kann jedoch auch anderweitige Elemente, die ein Sicherheitsmerkmal darstellen können oder optisch wirksam sind, enthalten, wie Charms, Taggants oder Melierfasern. Dabei enthält der Sicherheitsfaden bevorzugt eine Kombination mehrerer der genannten Pigmente und/ oder Stoffe.

Diese Pigmente und/oder Stoffe können in dem Sicherheitsfadensubstrat angeordnet werden. Alternativ oder zusätzlich kann auf dem Sicherheitsfadensubstrat auf einer Vorder- und/oder Rückseite, das heißt als Überdruck und/oder als Unterdruck, eine Druckschicht aus einer Druckfarbe aufgebracht sein, welche die genannten Pigmente und/ oder Stoffe enthält. Dabei kann die Druckschicht deckungsgleich zu dem Sicherheitsfaden oder dem Sicherheitsfadensubstrat angeordnet sein oder sich auch auf weitere, beispielsweise benachbarte Bereiche der mit dem Sicherheitsfaden oder dem Sicherheitsfadensubstrat coextrudierten Folie erstrecken. Die Druckschicht kann auch vollflächig ausgebildet sein. Alternativ oder zusätzlich kann auch oberhalb des Sicherheitsfadens oder des Sicherheitsfadensubstrats eine Metallisierungsschicht vorgesehen sein, wie sie aus herkömmlichen Sicherheitsfäden bekannt ist.

Ist keine Druckschicht vorgesehen, so wird der Sicherheitsfaden üblicherweise durch das Sicherheitsfadensubstrat mit darin enthaltenen Pigmenten oder Stoffen, welche Sicherheitsmerkmale bilden können und/oder optisch wirksam sind, gebildet. Ist dagegen eine Druckschicht vorgesehen, so wird der Sicherheitsfaden üblicherweise durch die Kombination von Sicherheitsfadensubstrat und Druckschicht gebildet. In einer solchen Druckschicht können Aussparungen vorgesehen sein, die einem Betrachter eine Information vermitteln. Bevorzugt stellt der Sicherheitsfaden voneinander verschiedene Auflicht- und Durchlichtinformationen für einen Betrachter bereit.

Die oberhalb des Sicherheitsfadens angeordnete Druckschicht wird bevorzugt im Siebdruck- oder Offsetdruckverfahren aufgebracht. Dabei lassen sich im Offsetdruckverfahren insbesondere Guilloche-, Mikro-, Iris- oder Fluor-Drucke realisieren. Das Siebdruckverfahren ist vorteilhaft, um die Druckfarben mit den oben genannten Pigmenten und/oder Stoffen, welche Sicherheitsmerkmale darstellen können oder optisch wirksam sind, aufzubringen. Mit Hilfe des Siebdruckverfahrens kann aber auch ein Spiegel- oder Rainbow-Druck realisiert werden. Dazu wird im ersten Fall bevorzugt eine sogenannte Spiegelfarbe aufgedruckt, die beispielsweise glänzende, metallischglänzende oder silbrig-glänzende Pigmente enthält.

Die verschiedenen, obengenannten Pigmente und Stoffe sowie die verschiedenen Druckschichten und Druckverfahren können beliebig miteinander kombiniert werden. Die vorliegende Erfindung schafft somit viele Freiheitsgrade bei der Ausgestaltung des zusammen mit einer Kunststoffolie des Kartenkörpers der Datenträgerkarte coextrudierten Sicherheitsfadens.

In einer weiteren bevorzugten Ausgestaltung des erfindungsgemäßen Datenträgers umfasst der Kartenkörper zusätzlich zu der zusammen mit dem Sicherheitsfaden coextrudierten Folie wenigstens eine weitere Folie, wobei die Folien miteinander laminiert oder coextrudiert sind, und die weitere Folie vorzugsweise vollflächig ausgebildet ist. Diese weitere Folie dient beispielsweise zur mechanischen Stabilisierung der coextrudierten Folie mit dem Sicherheitsfaden oder dem Sicherheitsfadensubstrat und/ oder als Schutzschicht. Dabei kann eine solche weitere Folie sowohl auf der Vorderseite als auch auf der Rückseite der zusammen mit dem Sicherheitsfaden coextrudierten Folie angeordnet sein. Die weitere Folie kann dabei eine Deckschicht der Datenträgerkarte sein, so dass die coextrudierte Folie eine Innenfolie der Datenträgerkarte und somit eine Kartenkernschicht bildet. Alternativ kann die weitere Folie eine Kartenkernfolie, während die coextrudierte Folie ebenfalls eine Kartenkernfolie oder auch eine Deckschicht sein kann. Die zusammen mit dem Sicherheitsfaden oder coextrudierte Folie und die eine oder mehreren weiteren Folien liegen unmittelbar aufeinander, das heißt sie grenzen - gegebenenfalls abgesehen von einer Bedruckung oder Beschichtung - direkt aneinander. Die weitere Folie auf Vorder- und/ oder Rückseite der coextrudierten Folie ist vorzugsweise transparent oder transluzent. Sie kann zur Einbringung zusätzlicher Pigmente oder Features verwendet werden und beispielsweise laserempfindliche oder laserveränderbare Pigmente für eine Laserbeschriftung enthalten.

In einer besonders bevorzugten Ausgestaltung umfasst der Sicherheitsfaden fluoreszierende Pigmente. Dabei ist auf dessen Vorder- und Rückseite jeweils vollflächig eine Schicht oder Folie angeordnet, die das Anregungslicht der fluoreszierenden Pigmente absorbiert. Im einfachsten Fall sind die auf Vorder- und Rückseite angeordneten weiteren Folien UV-absorbierend, für sichtbares Licht jedoch transparent oder transluzent. Dadurch ergibt sich ein Sicherheitsfaden, der bei UV-Anregung nur an den Stirnseiten, an denen der Sicherheitsfaden nicht von einer UV-absorbierenden Schicht abgedeckt ist, fluoresziert und somit nur dort das UV-Anregungslicht sichtbar macht. Bevorzugt werden oberhalb des Sicherheitsfadens und/ oder an einem Rand oder einer Kante des Kartenkörpers Linsen oder Mikrolinsen, vorzugsweise Zylinderlinsen, angeordnet. Im letzteren Fall spricht man auch von sogenannten randabfallenden Linsen. Solche Linsen gestatten eine verbesserte Beobachtung des Sicherheitsfadens bzw. des Randbereichs des Kartenkörpers. Dies ist beispielsweise bei der Verwendung von Mikroschrift, etwa in dem Sicherheitsfaden, oder bei der Verwendung eines so genannten MLI (Multiple Laser Image), eines CLI (Changeable Laser Image) oder eines DLI (Dynamic Laser Image) von Vorteil. Dabei ist es von Vorteil, transparente Zwischenschichten als Abstandsschichten vorzusehen, wodurch größere Linsenradien möglich werden, was die Herstellung der Linsen vereinfacht.

Neben dem erfindungsgemäß per Coextrusion geschaffenen Sicherheitsfaden, kann zusätzlich auch ein herkömmlicher Sicherheitsfaden in der Datenträgerkarte vorgesehen sein.

Neben der oben beschriebenen Datenträgerkarte, betrifft die Erfindung ferner ein Verfahren zur Herstellung einer solchen Datenträgerkarte mit einem Kartenkörper, der eine oder mehrere Kunststoffolien und wenigstens einen Sicherheitsfaden umfasst. Dabei wird der Sicherheitsfaden mit wenigstens einer der Folien coextrudiert. Die Coextrusion erfolgt dabei vorzugsweise mit einem Mehrdüsenextruder bevorzugt bei einer Temperatur von 230°C und mehr, insbesondere bei 250°C. Nachfolgend können weitere Kunststoffolien auflaminiert oder gleichzeitig mit coextrudiert werden. Das Herstellungsverfahren kann weitere Schritte umfassen, beispielsweise das Ausstanzen des Kartenkerns aus der coextrudierten Folie, das Einbringen eines Chips bzw. eines Magnetstreifens und/ oder das Personalisieren der Datenträgerkarte durch Laserbeschriftung.

Weitere Ausführungsbeispiele und Vorteile der Erfindung werden nachfolgend beispielhaft anhand der begleitenden Figuren erläutert. Die Ausführungsbeispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Es zeigen:
- Figur 1: eine perspektivische Ansicht eines ersten Ausführungsbeispiels der Erfindung;
- Figur 2: einen Querschnitt durch das erste Ausführungsbeispiel;
- Figur 3: ein Schema einer Coextrusionsanordnung;
- Figur 4: eine perspektivische Ansicht eines zweiten Ausführungsbeispiels;
- Figur 5a: eine perspektivische Ansicht eines dritten Ausführungsbeispiels; und
- Figur 6: einen Querschnitt durch ein viertes Ausführungsbeispiel.

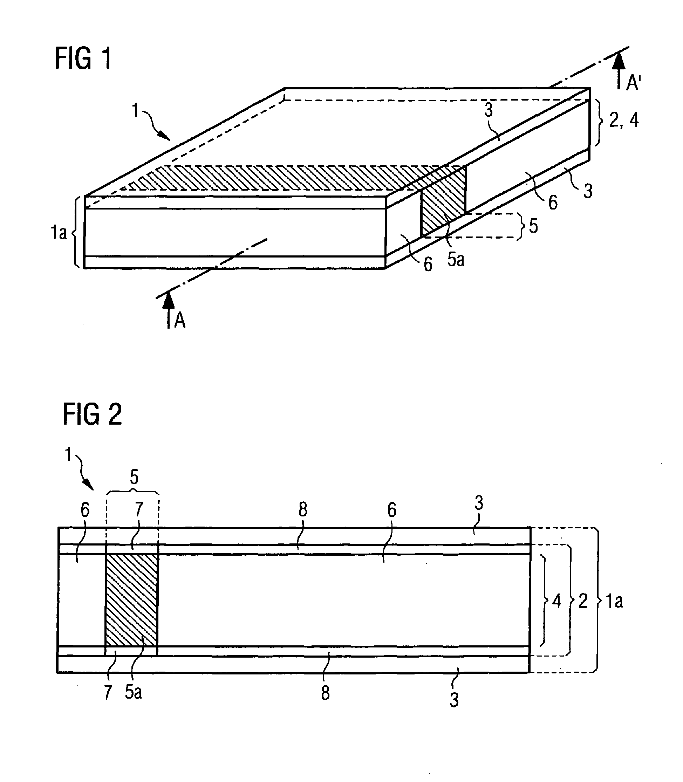

In Figur 1 ist ein erstes Ausführungsbeispiel einer Datenträgerkarte 1 perspektivisch dargestellt. Die Datenträgerkarte 1 umfasst einen Kartenkörper 1a mit einem Kartenkern 2, auf dessen Vorder- und Rückseite transparente Deckschichten 3 angeordnet sind; der Kartenkern 2 besteht aus wenigstens einer Folie 4. Kartenkern 2 und Deckschichten 3 bilden zusammen den Kartenkörper 1a. Auf dem Kartenkern 2 können, wie in Fig. 2 angedeutet, Druckschichten 7, 8 ausgebildet sein. Der Kartenkern 2 ist typischerweise zwischen 80 und 840 µm dick, so dass die gesamte Datenträgerkarte 1 eine ausreichende Stabilität besitzt. Die Datenträgerkarte 1 weist einen integrierten Sicherheitsfaden 5 auf.

Im gezeigten Ausführungsbeispiel umfasst der Kartenkern 2 genau eine Folie 4, die durch Coextrusion hergestellt und als Streifenfolie ausgebildet ist. Die coextrudierte, im folgenden Streifenfolie genannte Folie 4 weist in der Fläche der Folie nebeneinanderliegende, parallele Streifen 5a, 6 mit unterschiedlichen Beschaffenheiten auf. Die Streifenfolie 4 umfasst dabei zumindest einen im Vergleich zur Breite der Folie schmalen Streifen 5a, dessen Beschaffenheit sich in zumindest einer Eigenschaft von der Beschaffenheit der benachbarten Streifen 6 unterscheidet; mit Blick auf seine geringe Breite wird der Streifen 5a nachfolgend Fadenstreifen genannt.

Der Fadenstreifen 5a trägt wenigstens ein Sicherheitsmerkmal, das manipulationssicher ist und ein Nachahmen des Fadenstreifens 5a bzw. einer damit ausgestatten Datenträgerkarte 1 verhindert; in einer Variante entfaltet der Fadenstreifen 5a, wie nachfolgend noch beschrieben wird, eine Wechselwirkung mit wenigstens einer anderen Schicht der Datenträgerkarte 1, z.B. mit einer Druckschicht, und erzeugt durch diese Wechselwirkung ein manipulationssicheres Sicherheitsmerkmal. Im ersten Fall imitiert der Fadenstreifen 5a unmittelbar einen Sicherheitsfaden nach Banknotenart, im zweiten Fall fungiert der Fadenstreifen 5a als ein Sicherheitsfadensubstrat, das zusammen mit einer anderen Schicht der Datenträgerkarte 1 einen banknotenartigen Sicherheitsfaden nachbildet. In beiden Fällen besitzt die fertige Datenträgerkarte 1 also einen integrierten Sicherheitsfaden nach Banknotenart, der entweder unmittelbar durch den Fadenstreifen 5a gebildet ist oder der durch Zusammenwirken des Fadenstreifens 5a mit einer anderen Schicht der Kartenkörpers 1a entsteht.

Die beiden an der Fadenstreifen 5a angrenzenden Streifen 6 besitzen zweckmäßig jeweils eine konstante Breite und sind von einer identischen Beschaffenheit - die sich zumindest in einer Eigenschaft von der Beschaffenheit des Fadenstreifens 5a unterscheidet.

Typischerweise sind die an den Fadenstreifen 5a angrenzenden Streifen 6 der coextrudierten Streifenfolie 4 so ausgestaltet, dass sich der Fadenstreifen 5a visuell deutlich von den benachbarten Streifen 6 unterscheidet. Beispielsweise sind die Streifen 6 opak, nicht glänzend und besitzen eine ausgeprägte Eigenfarbe, während der Fadenstreifen 5a ein transparentes oder zumindest transmittierendes Basismaterial aufweist und einen Glanzeffekt zeigt.

Die Deckschichten 3 sind Kunststoffolien, die in üblicher Weise auf den Kartenkern 2 laminiert sind. Optional kann auf die Deckschichten 3 auch verzichtet werden. Der Kartenkern 2 bildet dann alleine den Kartenkörper 1a der Datenträgerkarte 1.

Obgleich in Fig.1 nur eine Streifenfolie gezeigt ist, kann ein Kartenkörper 1a bzw. ein Kartenkern 2 eines Kartenkörpers 1a selbstverständlich auch aus zwei, drei oder mehr als drei übereinander angeordnete coextrudierte Streifenfolien 4 aufgebaut sein, die jeweils einen Fadenstreifen 5a aufweisen. Die Streifenfolien 4 sind dann so angeordnet, dass die jeweiligen Fadenstreifen 5a übereinander liegen; jeder Fadenstreifen 5a bildet dann einen Teil des Sicherheitsfadens 5.

Figur 2 zeigt einen Querschnitt durch die Datenträgerkarte 1 aus Figur 1 entlang der Linie A-A'; in Figur 2 sind zudem unmittelbar auf der Streifenfolie 4 angeordnete Druckschichten 7, 8 dargestellt. Der Kartenkern 2 wird hier von der Streifenfolie 4 und den Druckschichten 7, 8 gebildet. Die Druckschichten 7, 8 sind im Ausführungsbeispiel jeweils auf beiden Seiten der Streifenfolie 4 ausgebildet; vorzugsweise sind sie, wie in Fig. 2 angedeutet, auf die Gestaltung der Streifen 5a, 6 abgestimmt. Die Druckschichten 7 liegen dabei deckungsgleich über dem Fadenstreifen 5a. Der Fadenstreifen 5a besteht aus einem transmittierenden Material. Die Druckschichten 7 bestehen z.B. aus einer Spiegelfarbe und werden zweckmäßig in einem Siebdruckverfahren aufgebracht. Der Auftrag erfolgt so, dass die resultierenden Druckschichten 7 spiegelnd und je nach Schichtdicke der Druckschicht 7 opak oder transmittierend sind. Es ist möglich, eine Druckschicht 7 nur auf einer Seite der Streifenfolie 4 auszubilden.

Die ebenfalls beidseitig aufgebrachten Druckschichten 8 bedecken den übrigen, nicht von den Druckschichten 7 abgedeckten Teil der Streifenfolie 4. Sie haben vorzugsweise die gleiche Dicke wie die Druckschichten 7. Die Druckschichten 8 sind grundsätzlich optional; wie die Druckschichten 7 kann eine Druckschicht 8 auch nur auf einer Seite der Streifenfolie 4 vorgesehen sein.

Bei dem in Figur 2 gezeigten Ausführungsbeispiel fungiert der Fadenstreifen 5a als Sicherheitsfadensubstrat, das zusammen mit den deckungsgleich darüber angebrachten Druckschichten 7 einen banknotenartigen Sicherheitsfaden 5 bildet.

Das Zusammenwirken des transmittierenden Sicherheitsfadensubstrats 5a mit den in Spiegelfarbe ausgeführten Druckschichten 7 führt in der Regel bereits unmittelbar zu metallischen, glänzenden Effekten, die Effekte imitieren, wie sie von herkömmlichen Sicherheitsfäden bekannt sind. Mit Hilfe von vorder- und/ oder rückseitig angeordneten Druckschichten 7 aus Spiegelfarbe lassen sich etwa Interferenzeffekte erzeugen. Geeignete Farben hierfür sind z.B. sogenannte "Rainbow-Silber-Inks", wie sie von der Pröll KG, 91781 Weißenburg, Deutschland, erhältlich sind. In manchen Fällen wird ein banknotartiger Sicherheitsfaden unmittelbar so gut imitiert, dass auf weitere Maßnahmen zur Verbesserung dieser beabsichtigten Wirkung verzichtet werden.

In einer Ausgestaltung, die eine verstärkte Imitation eines Sicherheitsfadens liefert, sind in dem Fadenstreifen 5a und/oder in den Druckschichten 7 geeignete Pigmente oder Zusatzstoffe vorgesehen, die als Sicherheits- oder Echtheitsmerkmal wirken. Die Zusatzstoffe oder Pigmente können z.B. optisch wirksam sein und bei einem Betrachter einen besonderen, visuell wahrnehmbaren Effekt erzielen, etwa einen optisch variablen Effekt. Solche Zusatzstoffe sind beispielsweise Colorshift-Pigmente, die einen Farbkippeffekt erzeugen, wie Colorcrypt-, Colorstream,- Iriodin-, OVI- oder STEP-Pigmente; andere Zusatzstoffe sind etwa silberfarbene, goldfarbene und/ oder glänzende Pigmente oder Stoffe, die einen Glanzwinkel aufweisen und damit das Erscheinungsbild eines an sich bekannten Sicherheitsfadens nachbilden, was insbesondere bei silbrig-glänzenden Pigmenten der Fall ist. In anderen Ausführungen können auch fluoreszierende oder thermochrome Pigmente oder Stoffe vorgesehen sein, ebenso laserempfindliche oder laserveränderliche Pigmente oder Stoffe, die eine nachfolgende Bearbeitung des Sicherheitsfadenssubstrats 5a per Laserbestrahlung ermöglichen; für letzteres kommen insbesondere IR-absorbierende Pigmente wie Ruß in Frage.

Der Fadenstreifen 5a und/oder die Druckschicht 7 können ferner auch andere geeignete Elemente enthalten, wie Charms, Taggants oder Melierfasern. Auch können der Fadenstreifen 5a und/ oder die Druckschicht 7 eine Kombination mehrerer der genannten Pigmente und/ oder Stoffe enthalten. Diese Stoffe und Pigmente, vor allem laserempfindliche oder laserveränderliche Pigmente oder Stoffe, können zudem auch in den Deckschichten 3 vorgesehen sein.

Die Druckschicht 7 kann ferner - nicht dargestellte -Aussparungen aufweisen, etwa in Form einer Negativschrift, die beispielsweise als Information für einen Betrachter oder zur Schaffung von Auflicht-/Durchlicht-Effekten dienen.

In einer besonders einfachen Variante des ersten Ausführungsbeispiels wird auf die Druckschichten 7 verzichtet und werden lediglich in dem Fadenstreifen 5a Pigmente oder Stoffe vorgesehen, beispielsweise silbrig glänzende Pigmente, die Sicherheitsmerkmale bilden und/oder optisch wirksam sind,. In dieser Variante bildet der Fadenstreifen 5a mit den darin enthaltenen Pigmenten oder Stoffen unmittelbar einen Sicherheitsfaden. So kann in manchen Fällen bereits eine ausreichend gute Imitation eines herkömmlichen, banknotenartigen Sicherheitsfadens erreicht werden. 5a

Als Basismaterial für die verschiedenen Folien der Datenträgerkarte 1, insbesondere für den Fadenstreifen 5a und die Streifen 6 der coextrudierten Streifenfolie 4 kommen technische Polymere wie Polycarbonat (PC), Polyethylenterephthalat (PET), Polyethylenterephthalat-Glykol (PETG), thermoplastische Elastomere (TPE), thermoplastische Elastomere auf Urethanbasis (TPU), thermoplastische Elastomere auf Copolyesterbasis (TPC), Polyolefine, Polyamid (PA), Polyvinylchlorid (PVC) und Acrylnitril-Butadien-StyrolCopolymerisat (ABS) oder Mischungen davon in Frage.

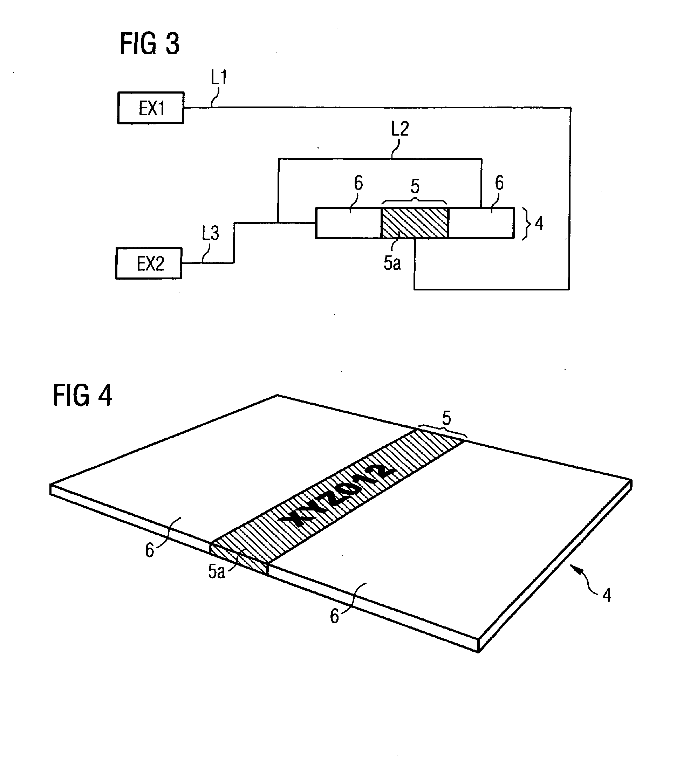

In Figur 3 ist eine Coextrusionsanordnung zur Bildung einer coextrudierten Streifenfolie 4 in Form einer Streifenfolie schematisch dargestellt. In einem ersten Extruder EX1 wird ein Schmelzestrom zur Bildung eines Fadenstreifens 5a5a erzeugt, wie durch eine schematische Leitung L1 angedeutet ist. Ferner wird in dem Extruder EX2 ein zweiter Schmelzestrom zur Bildung der beiden Streifen 6 der Streifenfolie 4 erzeugt, was durch die schematisch dargestellten Leitungen L2 und L3 angedeutet ist. Solche Coextrusionsanordnungen und -verfahren sind allgemein bekannt, so dass hier auf eine detaillierte Beschreibung solcher Verfahren und der beispielsweise verwendeten Mehrdüsenextruder oder Parallelmehrdüsen-Extrusionsvorrichtungen verzichtet wird. In diesem Zusammenhang wird auf die Druckschrift DE 10 2004 013 201 A1 verwiesen, und die darin genannten Vorrichtungen, Verfahren und Verfahrensschritte zur Coextrusion werden in den Offenbarungsgehalt der vorliegenden Schrift aufgenommen. Durch die dargestellte Coextrusion entsteht eine coextrudierte Streifenfolie 4 in Form einer Streifenfolie mit jeweils homogen ausgebildeten Streifen 6 und einem homogen ausgebildeten Sicherheitsfadensubstrat 5a. Dabei ist es von Vorteil, wenn die Coextrusion bei Schmelzetemperaturen von 230°C und darüber, beispielsweise bei 250°C stattfindet, da hierdurch eine homogene, coextrudierte Streifenfolie 4 ohne mechanische Schwachstellen erzeugt wird.

In Figur 4 ist eine coextrudierte Folie 4 in Form einer Streifenfolie gemäß einem zweiten Ausführungsbeispiel dargestellt. Der Übersichtlichkeit halber ist hier auf die Darstellung von Deckschichten 3 verzichtet. Die Druckschichten 7,8 sind in dem zweiten Ausführungsbeispiel nicht vorgesehen. Der Fadenstreifen 5a der Streifenfolie 4 weist ein transparentes Basismaterial auf, in das laserempfindliche Pigmente, etwa IR-absorbierende Pigmente wie Rußpartikel, eingebracht sind. Dies ermöglicht eine lokale Veränderung des visuellen Eindrucks des Fadenstreifens 5a zur Schaffung des Sicherheitsfadens 5, beispielsweise eine lokale Schwärzung, mit Hilfe einer Laserbestrahlung oder Laserbeschriftung und somit eine Personalisierung der Datenträgerkarte nach deren Herstellung, wie in Figur 4 durch den Schriftzug "XYZ012" angedeutet. Dabei kann der Fadenstreifen 5a von beiden Seiten her, d.h. sowohl von der Vorder- als auch von der Rückseite der Streifenfolie 4, per Laserstrahlung verändert werden. In einer Variante des zweiten Ausführungsbeispiels können durch weitere Pigmente oder Stoffe innerhalb des Fadenstreifens 5a oder in einer darauf aufgebrachten Druckschicht 7 weitere Effekte für den Sicherheitsfaden 5 geschaffen werden.

In einer nicht dargestellten weiteren Ausführungsvariante sind in dem Fadenstreifen 5a und/ oder einer darauf angeordneten Druckschicht 7 Colorshift-Pigmente, wie beispielsweise Colorcrypt-, Colorstream, Iriodin, OVI-oder STEP-Pigment vorgesehen, die einen Farbkippeffekt bei Verkippung, beispielsweise um die Längsrichtung des Sicherheitsfadens 5a, erzeugen.

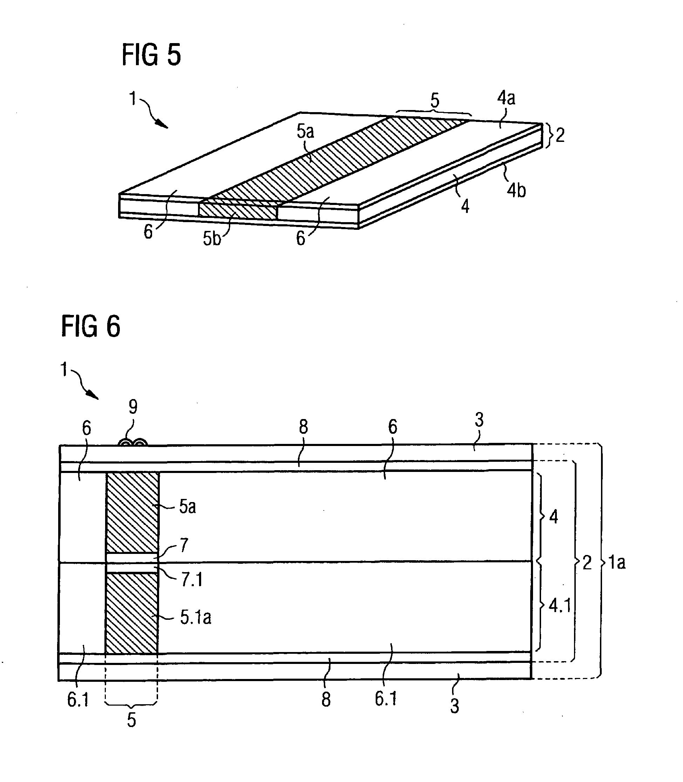

In Figur 5 ist der Kartenkern 2 einer Datenträgerkarte 1 gemäß einem dritten Ausführungsbeispiel dargestellt. Der Kartenkern 2 umfasst eine innenliegende Folie 4, die in Form einer coextrudierten Streifenfolie ausgebildet ist. Weiter umfaßt die Datenträgerkarte 1 eine erste, auf der Vorderseite der Streifenfolie 4 vollflächig angeordnete weitere Folie 4a und eine zweite, identische, rückseitig angeordnete weitere Folie 4b. Die weiteren Folien 4a und 4b sind UV-absorbierend, für sichtbares Licht jedoch transmittierend, insbesondere transparent. Der Fadenstreifen 5a der Streifenfolie 4 umfasst fluoreszierende Pigmente, welche durch UV-Strahlung anregbar sind. Die weiteren Streifen 6 der Streifenfolie 4 weisen eine von dem Fadenstreifen 5a verschiedene Beschaffenheit auf. Beispielsweise ist der Sicherheitsfaden 5a transmittierend, während die benachbarten Streifen 6 opak sind. Druckschichten 7, 8 wie im ersten Ausführungsbeispiel sind in dem vierten Ausführungsbeispiel nicht vorgesehen. Entsprechend ist das die fluoreszierenden Pigmente enthaltende Fadenstreifen 5a, abgesehen von den Stirnflächen, von den UV-absorbierenden weiteren Folien 4a, 4b vollständig abgedeckt. Bei UV-Anregung tritt daher Fluoreszenz nur an den Stirnflächen 5b des Fadenstreifens 5a auf, was einen interessanten optischen Effekt darstellt.

In einer nicht dargestellten Variante des dritten Ausführungsbeispiels fungieren die UV-absorbierenden Folien als Deckschichten 3. In einer weiteren, ebenfalls nicht dargestellten Variante des dritten Ausführungsbeispiels sind die fluoreszierenden Pigmente oder Stoffe, zusätzlich oder alternativ in einer auf dem Fadenstreifen 5a aufgebrachten Druckschicht 7 angeordnet.

In Figur 6 ist ein Querschnitt durch ein viertes Ausführungsbeispiel einer Datenträgerkarte 1 dargestellt. Darin umfasst der Kartenkern 2 zwei miteinander laminierte, jeweils als Streifenfolie ausgebildete, coextrudierte Folien 4, 4.1, die in dem Ausführungsbeispiel Innenfolien sind. Die in Figur 6 obenliegend dargestellte Streifenfolie 4 umfasst einen Fadenstreifen 5a und weitere benachbarte Streifen 6, während die in Figur 6 untenliegend dargestellte Streifenfolie 4.1 ebenfalls einen Fadenstreifen 5.1a sowie weitere Streifen 6.1 umfasst. Dabei sind die weiteren Streifen 6, 6.1 opak ausgebildet, während die Fadenstreifen 5a transmittierend sind und gegebenenfalls weitere optische Effekte zeigen. Die beiden Fadenstreifen können gleichartig oder verschieden ausgeführt sein, indem sie sich z.B. in einer Materialeigenschaft unterscheiden oder unterschiedliche Sicherheits- oder Echtheitsmerkmale tragen. Wie in Figur 6 dargestellt, sind die beiden Folien 4, 4.1 vorzugsweise derart angeordnet, dass die jeweiligen Fadenstreifen 5a, 5.1a deckungsgleich übereinander liegen; jeder Fadenstreifen 5a, 5.1a bildet also einen Teil des Sicherheitsstreifens 5. Eine andere als deckungsgleiche Anordnung der Fadenstreifen 5a, 5.1a ist selbstverständlich möglich,

In dem Ausführungsbeispiel nach Figur 6 ist auf der obenliegenden Streifenfolie 4 deckungsgleich zu dem Fadenstreifen 5a eine Druckschicht 7 als Unterdruck aus einer Spiegelfarbe vorgesehen. Auf der untenliegenden Streifenfolie 4.1 ist deckungsgleich zu dem Fadenstreifen 5a eine Druckschicht 7.1 als Überdruck ebenfalls aus einer Spiegelfarbe dargestellt. Die beiden Druckschichten 7, 7.1 können identisch ausgebildet sein. Mit Hilfe der Druckschichten 7, 7.1 lassen sich ebenfalls Interferenzeffekte in dem resultierenden Sicherheitsfaden 5 erzeugen. Alternativ oder zusätzlich zu diesen Interferenzeffekten kann mit Hilfe der Druckschichten 7, 7.1 aus Spiegelfarbe auch ein identischer visueller Eindruck des Sicherheitsfadens 5 bei Betrachtung der Vorder- und Rückseite erzeugt werden. Die Druckschichten 7, 7.1 sind wiederum grundsätzlich optional und können einzeln oder beide auch entfallen.

Auf der Deckschicht 3 der Datenträgerkarte 1 sind in Ausführungsbeispiel nach Fig. 6 oberhalb des Sicherheitsfadens 5 weiterhin Mikrolinsen 9 vorgesehen, mit deren Hilfe ein MLI, ein CLI oder ein DLI realisiert werden kann. In einer nicht dargestellten Variante dieses Ausführungsbeispiels sind diese Mikrolinsen 9 randabfallend an der Kante der Datenträgerkarte 1 angeordnet.

Optional ist auf den Oberflächen des Kartenkerns 2 mittels Offsetdruck oder Siebdruck jeweils eine weitere Druckschicht 8 angeordnet, welche sich auch über die Vorderseite und Rückseite des Sicherheitsfadens 5 erstrecken kann.

Neben den in dem vierten Ausführungsbeispiel genannten Sicherheitsmerkmalen einer Spiegelfarbe und eines MLI's, eines CLI's oder eines DLI's, können auch die weiteren, bereits genannten Stoffe und Pigmente, die Sicherheitsmerkmale darstellen können oder optisch wirksam sind, in den Fadenstreifen 5a, 5.1a oder in darüber liegenden Druckschichten 7, 7.1, 8 vorgesehen sein und miteinander kombiniert werden.

Insgesamt ergibt sich für das Ausführungsbeispiel der Fig. 6 eine Vielzahl von Freiheitsgraden bei der Ausgestaltung des resultierenden Sicherheitsfadens 5, der sich aus dem Zusammenwirken der Fadenstreifen 5a, 5.1a und eventuell vorhandener Druckschichten 7, 7.1, 8 ergibt.

In einer nicht dargestellten weiteren Ausführungsform ist anstelle der im vierten Ausführungsbeispiel untenliegenden Streifenfolie 4.1 eine vollflächig homogen ausgebildete Folie vorgesehen. Dies erhöht die Stabilität des Kartenkerns 2 und somit der Datenträgerkarte 1.

## Patentansprüche

1. Datenträgerkarte (1), insbesondere Chip- und/oder Magnetstreifenkarte, mit einem eine oder mehrere Folien (4, 4.1) umfassenden Kartenkörper (1a) und einem in den Kartenkörper (1a) integrierten Sicherheitsfaden (5), wobei zumindest eine der Folien (4, 4.1) durch Coextrusion hergestellt ist und wenigstens zwei in der Fläche nebeneinanderliegende Streifen (5a, 6) aufweist, wobei zumindest ein Streifen (5a) ein Fadenstreifen ist, der sich in wenigstens einer Materialeigenschaft von den angrenzenden Streifen (6) unterscheidet, und auf den Fadenstreifen (5a) als Über- oder Unterdruck wenigstens eine Druckschicht (7, 7.1) aufgebracht ist, **dadurch gekennzeichnet, dass** der Fadenstreifen (5a) durch Zusammenwirken mit der wenigstens einen Druckschicht (7) den Sicherheitsfaden (5) oder einen Teil des Sicherheitsfadens (5) bildet.

2. Datenträgerkarte (1) nach Anspruch 1 oder 2, **dadurch gekennzeichnet, dass** durch das Zusammenwirken des Fadenstreifens (5a) und der wenigstens einen Druckschicht (7) ein visuell wahrnehmbarer Effekt entsteht.

3. Datenträgerkarte (1) nach einem der vorhergehenden Ansprüche, **dadurch gekennzeichnet, dass** durch das Zusammenwirken des Fadenstreifens (5a) und der wenigstens einen Druckschicht (7) ein metallisch glänzender Effekt und/oder ein Interferenzeffekt entsteht.

4. Datenträgerkarte (1) nach einem der vorhergehenden Ansprüche, **dadurch gekennzeichnet, dass** der Fadenstreifen (5a) transmittierend ausgebildet.

5. Datenträgerkarte (1) nach Anspruch 4, **dadurch gekennzeichnet, dass** der Kartenkörper (1a) oder zumindest ein Kartenkern (2) des Kartenkörpers (1a), zwei oder mehr als zwei übereinander angeordnete coextrudierte Streifenfolien (4) aufweist, welche jeweils einen Fadenstreifen (5a) aufweisen, wobei die jeweiligen Fadenstreifen (5a, 5.1a) übereinander liegen.

6. Datenträgerkarte (1) nach einem der vorhergehenden Ansprüche, **dadurch gekennzeichnet, dass** zumindest eine Folie (4, 4.1) eine Innenfolie des Kartenkörpers (1a) bildet und zumindest eine Druckschicht (7, 7.1) auf dieser Innenfolie ausgebildet ist.

7. Datenträgerkarte (1) nach einem der vorhergehenden Ansprüche, **dadurch gekennzeichnet, dass** der Fadenstreifen (5a) und/ oder eine Druckfarbe einer Druckschicht (7, 7.1) Colorshift-Pigmente, silberfarbene, goldfarbene und/ oder glänzende Pigmente oder Stoffe, fluoreszierende oder thermochrome Pigmente oder Stoffe, laserempfindliche Pigmente oder Stoffe, wie Ruß, und/ oder anderweitige Elemente wie Charms, Taggants und/ oder Melierfasern enthält.

8. Datenträgerkarte (1) nach einem der vorhergehenden Ansprüche, **dadurch gekennzeichnet, dass** die auf dem Fadenstreifen (5a) aufgebrachte Druckschicht (7, 7.1) eine Farb-, Rainbow- oder Spiegelschicht ist, die bevorzugt als Sieb- oder Offset-Druckschicht, aufgebracht ist.

9. Datenträgerkarte (1) nach einem der vorhergehenden Ansprüche, **dadurch gekennzeichnet, dass** die Druckschicht (7, 7.1) deckungsgleich auf dem Fadenstreifen (5a) ausgebildet ist.

10. Datenträgerkarte (1) nach einem der vorhergehenden Ansprüche, **dadurch gekennzeichnet, dass** der Fadenstreifen (5a) fluoreszierende Pigmente oder Stoffe enthält und beidseitig auf der zumindest einen Folie (4, 4.1) jeweils eine UV-absorbierende Schicht (4a, 4b), vorzugsweise eine UV-absorbierende Folie, angeordnet ist.

11. Datenträgerkarte (1) nach einem der vorhergehenden Ansprüche, **dadurch gekennzeichnet, dass** der Sicherheitsfaden (5) voneinander verschiedene Auflicht- und Durchlichtinformationen für einen Betrachter bereitstellt.

12. Datenträgerkarte (1) nach einem der vorhergehenden Ansprüche, **dadurch gekennzeichnet, dass** auf der Datenträgerkarte oberhalb des Sicherheitsfadens (5) und/oder an einem Rand des Kartenkörpers (1a) Linsen (9), vorzugsweise Zylinderlinsen, angeordnet sind.

13. Datenträgerkarte (1) nach einem der vorhergehenden Ansprüche, **dadurch gekennzeichnet, dass** der Fadenstreifen (5a) eine durch Laserbestrahlung erzeugte Laserbeschriftung aufweist.

14. Verfahren zur Herstellung einer Datenträgerkarte (1) mit einem eine oder mehrere Folien umfassenden Kartenkörper (1a) und einem in den Kartenkörper integrierten Sicherheitsfaden (5), nach einem der vorhergehenden Ansprüche, umfassend den Schritt:
- Coextrudieren eines Fadenstreifens (5a) mit zumindest einer der Folien (4, 4.1),
- Aufbringen einer Druckschicht (7) auf den Fadenstreifen (5a), die durch Zusammenwirken mit dem Fadenstreifen (5a) ein manipulationssicheres Sicherheitsmerkmal erzeugt und zusammen mit dem Fadenstreifen (5a) den Sicherheitsfaden (5) oder einen Teil des Sicherheitsfadens (5) bildet.

15. Verfahren nach Anspruch 14, **dadurch gekennzeichnet, dass** der Fadenstreifen (5a) und/oder eine andere Folie des Kartenkörpers (1a), insbesondere eine Deckschicht (3), laserempfindliche Pigmente oder Stoffe enthält und die Datenträgerkarte durch Laserbestrahlung personalisiert wird.

## Claims

1. A data carrier card (1), in particular a chip card and/or magnetic strip card, having a card body (1a) comprising one or several foils (4, 4.1) and a security thread (5) integrated in the card body (1a), wherein at least one of the foils (4, 4.1) is manufactured by coextrusion and has at least two strips (5a, 6) disposed next to each other flatly, wherein at least one strip (5a) is a thread strip that differs from the adjoining strips (6) with regard to at least one material property, and on the thread strip (5a) there is applied at least one printed layer (7, 7.1) as an overprinting or underprinting, **characterized in that** the thread strip (5a) forms the security thread (5) or a part of the security thread (5) by interaction with the at least one printed layer (7).

2. The data carrier card (1) according to claim 1 or 2, **characterized in that** by the interaction of the thread strip (5a) and the at least one printed layer (7) a visually perceivable effect arises.

3. The data carrier card (1) according to any of the preceding claims, **characterized in that** by the interaction of the thread strip (5a) and the at least one printed layer (7) a metallically lustrous effect and/or an interference effect arises.

4. The data carrier card (1) according to any of the preceding claims, **characterized in that** the thread strip (5a) is configured to be transmissive.

5. The data carrier card (1) according to claim 4, **characterized in that** the card body (1a) or at least a card core (2) of the card body (1a) has two or more coextruded strip foils (4) arranged above each other, which have respectively one thread strip (5a), wherein the respective thread strips (5a, 5.1a) are disposed above each other.

6. The data carrier card (1) according to any of the preceding claims, **characterized in that** at least one foil (4, 4.1) forms an inner foil of the card body (1a) and at least one printed layer (7, 7.1) is formed on this inner foil.

7. The data carrier card (1) according to any of the preceding claims, **characterized in that** the thread strip (5a) and/or a printing ink of a printed layer (7, 7.1) contains colorshift pigments, silver-colored, gold-colored and/or lustrous pigments or substances, fluorescent or thermochromic pigments or substances, laser-sensitive pigments or substances, such as carbon black, and/or other elements such as charms, taggants and/or mottling fibers.

8. The data carrier card (1) according to any of the preceding claims, **characterized in that** the printed layer (7, 7.1) applied to the thread strip (5a) is an ink, rainbow or mirror layer that is applied preferably as a screen printed layer or offset printed layer.

9. The data carrier card (1) according to any of the preceding claims, **characterized in that** the printed layer (7, 7.1) is formed congruently on the thread strip (5a).

10. The data carrier card (1) according to any of the preceding claims, **characterized in that** the thread strip (5a) contains fluorescent pigments or substances, and on both sides on the at least one foil (4, 4.1) there is arranged respectively one UV-absorbing layer (4a, 4b), preferably a UV-absorbing foil.

11. The data carrier card (1) according to any of the preceding claims, **characterized in that** the security thread (5) provides a viewer with mutually different incident-light information items and transmitted-light information items.

12. The data carrier card (1) according to any of the preceding claims, **characterized in that** on the data carrier card above the security thread (5) and/or at an edge of the card body (1a) lenses (9), preferably cylindrical lenses, are arranged.

13. The data carrier card (1) according to any of the preceding claims, **characterized in that** the thread strip (5a) has a laser inscription produced by laser irradiation.

14. A method for manufacturing a data carrier card (1) having a card body (1a) comprising one or several foils and a security thread (5) integrated in the card body, according to any of the preceding claims, comprising the step of:
- coextruding a thread strip (5a) with at least one of the foils (4, 4.1),
- applying a printed layer (7) to the thread strip (5a), said printed layer producing a manipulation-proof security feature by interaction with the thread strip (5a) and forming the security thread (5) or a part of the security thread (5) together with the thread strip (5a).

15. The method according to claim 14, **characterized in that** the thread strip (5a) and/or a different foil of the card body (1a), in particular a cover layer (3), contains laser-sensitive pigments or substances, and the data carrier card is personalized by laser irradiation.

## Revendications

1. Carte-support de données (1), en particulier carte à puce et/ou à bande magnétique, ayant un corps de carte (1a) comprenant une ou plusieurs feuilles (4, 4.1) et un fil de sécurité (5) intégré dans le corps de carte (1a), au moins une des feuilles (4, 4.1) étant fabriquée par coextrusion et comportant au moins deux rubans (5a, 6) adjacents dans la surface, au moins un ruban (5a) étant un ruban filiforme qui se différencie des rubans (6) adjacents en au moins une propriété de matériau, et au moins une couche d'impression (7, 7.1) étant appliquée sur le ruban filiforme (5a) en tant que surimpression ou sous-impression, **caractérisée en ce que** le ruban filiforme (5a) constitue par concomitance avec la au moins une couche d'impression (7) le fil de sécurité (5) ou une partie du fil de sécurité (5).

2. Carte-support de données (1) selon la revendication 1 ou 2, **caractérisée en ce que**, par la concomitance du ruban filiforme (5a) et de la au moins une couche d'impression (7), un effet visuellement perceptible est engendré.

3. Carte-support de données (1) selon une des revendications précédentes, **caractérisée en ce que**, par la concomitance du ruban filiforme (5a) et de la au moins une couche d'impression (7), un effet de brillance métallique et/ou un effet d'interférence est engendré.

4. Carte-support de données (1) selon une des revendications précédentes, **caractérisée en ce que** le ruban filiforme (5a) est réalisé sous forme transmettrice.

5. Carte-support de données (1) selon la revendication 4 **caractérisée en ce que** le corps de carte (1a) ou au moins un coeur de carte (2) du corps de carte (1a) comporte deux ou plus de deux feuilles en forme de ruban (4) coextrudées agencées les unes sur les autres qui comportent respectivement un ruban filiforme (5a), les rubans filiformes (5a, 5.1a) respectifs se superposant.

6. Carte-support de données (1) selon une des revendications précédentes, **caractérisée en ce qu'** au moins une feuille (4, 4.1) constitue une feuille intérieure du corps de carte (1a) et qu' au moins une couche d'impression (7, 7.1) est réalisée sur cette feuille intérieure.

7. Carte-support de données (1) selon une des revendications précédentes, **caractérisée en ce que** le ruban filiforme (5a) et/ou une encre d'impression d'une couche d'impression (7, 7.1) contient des pigments ColorShift, des pigments ou substances couleur argent, couleur dorée et/ou brillants, des pigments ou substances fluorescents ou thermochromiques, des pigments ou substances sensibles au laser tels que la suie, et/ou d'autres éléments tels que charms, marqueurs et/ou fibres chinées.

8. Carte-support de données (1) selon une des revendications précédentes, **caractérisée en ce que** la couche d'impression (7, 7.1) appliquée sur le ruban filiforme (5a) est une couche d'encre, une couche rainbow ou une couche miroir qui est de préférence appliquée en tant que couche sérigraphiée ou couche d'impression offset.

9. Carte-support de données (1) selon une des revendications précédentes, **caractérisée en ce que** la couche d'impression (7, 7.1) est réalisée de manière coïncidant avec le ruban filiforme (5a).

10. Carte-support de données (1) selon une des revendications précédentes, **caractérisée en ce que** le ruban filiforme (5a) contient des pigments ou substances fluorescents et que, des deux côtés sur la au moins une feuille (4, 4.1), respectivement une couche absorbant les UV (4a, 4b), de préférence une feuille absorbant les UV, est agencée.

11. Carte-support de données (1) selon une des revendications précédentes, **caractérisée en ce que** le fil de sécurité (5) met à disposition de l'observateur des informations en lumière incidente et en lumière transmise différentes les unes des autres.

12. Carte-support de données (1) selon une des revendications précédentes, **caractérisée en ce que**, sur la carte-support de données, au-dessus du fil de sécurité (5) et/ou à un bord du corps de carte (1a), des lentilles (9), de préférence des lentilles cylindriques, sont agencées.

13. Carte-support de données (1) selon une des revendications précédentes, **caractérisée en ce que** le ruban filiforme (5a) comporte une inscription laser générée par irradiation laser.

14. Procédé de fabrication d'une carte-support de données (1) ayant un corps de carte (1a) comprenant une ou plusieurs feuilles et un fil de sécurité (5) intégré dans le corps de carte, selon une des revendications précédentes, comprenant l'étape suivante:
- coextrusion d'un ruban filiforme (5a) avec au moins une des feuilles (4, 4.1),
- application, sur le ruban filiforme (5a), d'une couche d'impression (7) qui, par concomitance avec le ruban filiforme (5a), génère une caractéristique de sécurité inmanipulable et constitue concurremment avec le ruban filiforme (5a) le fil de sécurité (5) ou une partie du fil de sécurité (5).

15. Procédé selon la revendication 14, **caractérisée en ce que** le ruban filiforme (5a) et/ou une autre feuille du corps de carte (1a), en particulier une couche de recouvrement (3), contient des pigments ou substances sensibles au laser et **en ce que** la carte-support de données (1) est personnalisée par irradiation laser.
